# EUROPEAN PATENT APPLICATION

(11) **EP 2 682 581 A1**
(43) Date of publication of application: **08.01.2014**
(21) Application number: 13173371.9
(22) Date of filing: 24.06.2013
(51) Int. Cl.: F01N 3/20

(54) **Exhaust emission control apparatus for internal combustion engine, and control method for the exhaust emission control apparatus**

(30) Priority: 03.07.2012 JP 2012149584
(71) Applicant: TOYOTA JIDOSHA KABUSHIKI KAISHA, Toyota-shi, Aichi-ken, 471-8571 (JP)
(72) Inventor: Ota, Hirohiko, Aichi-ken 471-8571 (JP)
(74) Representative: Kuhnen & Wacker

(57) **Abstract**

An exhaust emission control apparatus for an internal combustion engine includes a urea water addition valve (104) provided in an exhaust passageway (1) and a supply passageway (102) that supplies urea water to the addition valve (104). This apparatus executes a recovery process of recovering an additive present in the supply passageway (102) by driving an electric urea water pump (103) with a vehicle-mounted battery (2) after the engine stops. In the exhaust emission control apparatus, the execution time of the recovery process is variably set on the basis of the battery voltage of the vehicle-mounted battery (2).

## Description

### BACKGROUND OF THE INVENTION

### 1. Field of the Invention

The invention relates to an exhaust emission control apparatus for an internal combustion engine and a control method for the exhaust emission control apparatus.

### 2. Description of Related Art

In recent years, exhaust emission control apparatuses that add a liquid-form additive into an exhaust passageway for the purpose of removal of nitrogen oxides (NOx) in exhaust gas, regeneration of an exhaust emission control catalyst, etc. have been put into practical use. A known example of such exhaust emission control apparatuses is a urea-SCR (Selective Catalytic Reduction) system exhaust emission control apparatus that uses urea ((NH₂)₂CO) water as a reducing agent. In this exhaust emission control apparatus, an addition valve for adding urea water is disposed on the exhaust passageway, and the addition valve is supplied with urea water from a urea water tank through a supply passageway. Furthermore, in the exhaust passageway there is disposed a support that supports an SCR catalyst at a downstream side of the addition valve in the direction of exhaust flow.

In an exhaust emission control apparatus of the urea-SCR scheme, removable of NOx is performed in this manner. That is, urea water is added into the exhaust passageway from the addition valve. The urea water added into the exhaust passageway is thermally decomposed or hydrolyzed in exhaust gas to change into ammonia (NH₃). Then, ammonia and NOx present in exhaust gas react with each other on the SCR catalyst. As a result, Nox in exhaust gas decomposes into water and nitrogen (N₂), which is harmless.

In the exhaust emission control apparatus described above, the additive is not added during stop of the engine, or the like. Therefore, the additive remains in the addition valve and the supply passageway. Then, if the remaining additive freezes and therefore expands in volume during a cold state of the internal combustion engine or the like, there is possibility of breakage of the addition valve or the supply passageway.

Therefore, in the related art, there has been proposed an apparatus that performs a recovery process in which, after stop of engine or the like, the urea water remaining in the addition valve or the supply passageway is recovered into the urea water tank by driving an electric pump (see, e.g., Japanese Patent Application Publication No. 2008-101564 (JP 2008-101564 A)).

In an apparatus described in JP 2008-101564 A, the execution time of the recovery process is set at a constant time. Therefore, if the battery voltage of a vehicle in which an internal combustion engine is mounted drops, the pump's driving capability decreases, so that the amount of recovery of the additive, such as urea water as mentioned above or the like, reduces. Hence, there is possibility of failing to sufficiently recover the additive remaining in the supply passageway or the like.

### SUMMARY OF THE INVENTION

The invention provides an exhaust emission control apparatus for an internal combustion engine and a control method for the exhaust emission control apparatus which are capable of precisely recovering an additive remaining in an addition valve or a supply passageway that supplies the additive to the addition valve.

An exhaust emission control apparatus for an internal combustion engine in accordance with a first aspect of the invention includes an addition valve provided in an exhaust passageway of the internal combustion engine and a supply passageway that supplies a liquid-form additive to the addition valve, and executes a recovery process of recovering the additive present in the supply passageway by driving an electric pump with a vehicle-mounted battery after the internal combustion engine stops. In the exhaust emission control apparatus, execution time of the recovery process is variably set based on battery voltage of the vehicle-mounted battery.

According to the foregoing construction, the execution time of the recovery process is variably set on the basis of the battery voltage of the vehicle-mounted battery. In other words, the execution time of the recovery process can be set according to the driving capability of the electric pump. Therefore, the additive remaining in the addition valve or the supply passageway can be precisely recovered by the recovery process.

In the exhaust emission control apparatus for the internal combustion engine in accordance with the first aspect of the invention, the execution time of the recovery process may be set longer as the battery voltage is lower.

According to this construction, since the execution time of the recovery process is longer as the battery voltage is lower, the execution time of the recovery process can be made longer in accordance with decrease in the driving capability of the pump. Therefore, shortage in the driving capability of the pump can be compensated for by increase in the execution time of the recovery process. Therefore, the additive remaining in the supply passageway can be sufficiently recovered. On the other hand, when the battery voltage is high and the driving capability of the pump is high, the execution time of the recovery process can be made short. Therefore, it is possible to restrain the pump from being driven more than necessary after the remaining urea water is recovered. Furthermore, the electric power consumption of the battery during stop of the engine can be reduced.

In the exhaust emission control apparatus for the internal combustion engine in accordance with the first aspect of the invention, the execution time of the recovery process may be variably set when the battery voltage is less than or equal to a predetermined value.

According to the foregoing construction, it is not until the battery voltage decreases to or below the predetermined value that the execution time of the recovery process is variably set. Therefore, it is possible to more precisely restrain the pump from being driven more than necessary during stop of the engine.

In the exhaust emission control apparatus for the internal combustion engine in accordance with the first aspect of the invention, the additive may be urea water, and a nitrogen oxide in exhaust gas may be removed through a selective catalyst reduction, using the urea water as a reducing agent.

A control method for an exhaust emission control apparatus for an internal combustion engine in accordance with a second aspect of the invention is a control method for an exhaust emission control apparatus for an internal combustion engine which includes an addition valve provided in an exhaust passageway of the internal combustion engine and a supply passageway that supplies a liquid-form additive to the addition valve and which executes a recovery process of recovering the additive present in the supply passageway by driving an electric pump with a vehicle-mounted battery after the internal combustion engine stops. In this method, execution time of the recovery process is variably set based on battery voltage of the vehicle-mounted battery.

This aspect of the invention may be applied to a urea-SCR-system exhaust emission control apparatus that adds urea water as an additive.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram showing an overall construction of an embodiment of an exhaust emission control apparatus for an internal combustion engine in accordance with the invention;
FIG. 2 is a flowchart showing an execution procedure of a recovery process according to the embodiment;
FIG. 3 is a graph showing a correspondence relation between the battery voltage and the set time for the recovery process employed in the embodiment;
FIG. 4 is a flowchart showing an execution procedure of a recovery process in an embodiment of an exhaust emission control apparatus for an internal combustion engine in accordance with the invention;
FIG. 5 is a graph showing a correspondence relation between the battery voltage and the execution time of the recovery process employed in another embodiment of the invention; and
FIG. 6 is a graph showing still another embodiment of the correspondence relation between the battery voltage and the execution time of the recovery process.

### DETAILED DESCRIPTION OF EMBODIMENTS

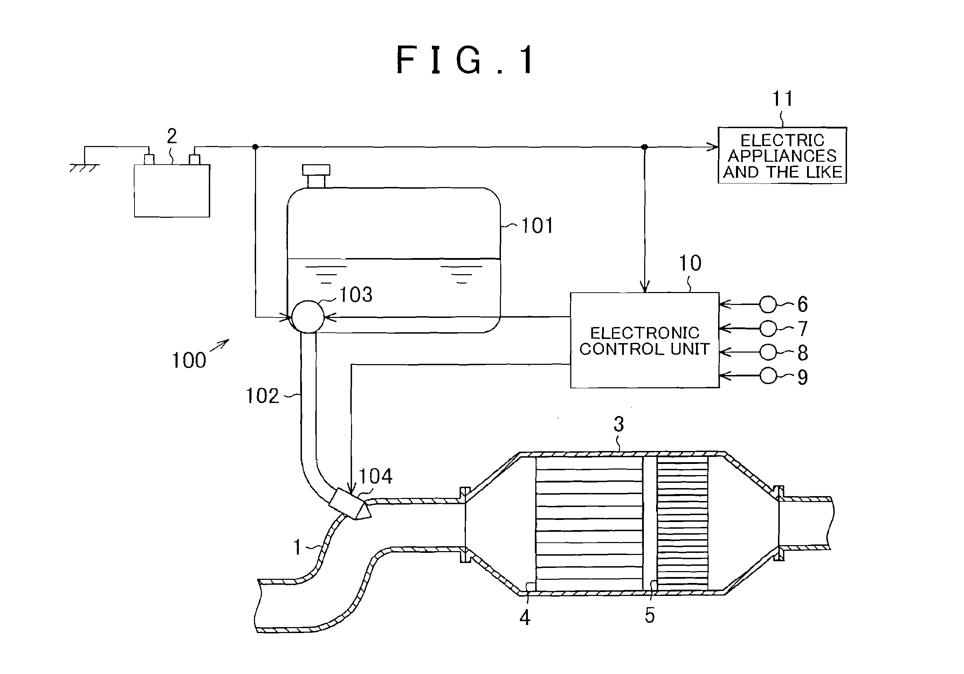

An embodiment of the exhaust emission control apparatus for an internal combustion engine of the invention will be described hereinafter with reference to FIGS. 1 to 3.

Firstly, a construction of the exhaust emission control apparatus for an internal combustion engine in accordance with the embodiment of the invention will be described with reference to FIG. 1. As shown in FIG. 1, an exhaust passageway 1 of the internal combustion engine is provided with a urea water supply device 100. The urea water supply device 100 supplies urea water into the exhaust passageway 1. The urea water supply device 100 is provided with a urea water tank 101. Urea ((NH₂)₂CO) water is stored in the urea water tank 101. A supply passageway 102 is connected to the urea water tank 101. Specifically, an end portion of the supply passageway 102 is connected to the urea water tank 101. The supply passageway 102 is a passageway for delivering urea water. A urea water pump 103 is disposed within the urea water tank 101. The urea water pump 103 is an electric pump to which voltage from a battery 2 mounted in the vehicle is applied and therefore which is driven by the voltage from the battery 2. As the electric urea water pump 103 is driven in the normal or forward direction, urea water is pressurized and discharged from the urea water tank 101 into the supply passageway 102. Another end portion of the supply passageway 102 is connected to a urea water addition valve 104. The urea water addition valve 104 is disposed on the exhaust passageway 1. The urea water addition valve 104 sprays urea water pumped through the supply passageway 102 into the exhaust passageway 1, according to the opening of the urea water addition valve 104.

A catalytic converter 3 is disposed downstream of the urea water addition valve 104 in the exhaust passageway 1 in the exhaust flow direction. Within the catalytic converter 3 there are provided an SCR catalyst support 4 and an ASC catalyst support 5. The SCR catalyst support 4 supports a urea-SCR catalyst. The ASC catalyst support 5 supports an ammonia slip restraining catalyst (hereinafter, referred to as ASC catalyst). The SCR catalyst support 4 and the ASC catalyst support 5 are each made of a ceramic material or the like, and are formed in a cylindrical shape whose interior has a honeycomb structure.

To the internal combustion engine there are attached various sensors for detecting states of operation of the engine. For example, an accelerator sensor 6, a brake sensor 7, a vehicle speed sensor 8, an ignition switch 9, etc. are provided. The accelerator sensor 6 detects the amount of depression of an accelerator pedal. The brake sensor 7 detects the amount of brake operation. The vehicle speed sensor 8 detects the vehicle speed of the vehicle. The ignition switch 9 detects an engine starting operation and an engine stop operation of an internal combustion engine performed by a driver of the vehicle.

Outputs of these various sensors and the like are input to an electronic control unit 10. The electronic control unit 10 is constructed mainly of a microcomputer that includes a central processing control unit (CPU), a read-only memory (ROM), a random access memory (RAM), a timer counter, input interfaces, output interfaces, etc. The read-only memory pre-stores various programs, maps, etc. The random access memory temporarily stores computation results provided by the CPU.

Incidentally, the electronic control unit 10 is supplied with electric power from the battery 2 mounted in the vehicle. Furthermore, the battery 2 supplies electric power not only to the electronic control unit 10 and the urea water pump 103 but also to electric appliances and the like 11 that are mounted in the vehicle. The electric appliances and the like 11 are, for example, lamps, an audio system, etc.

The electronic control unit 10 performs a control of addition of urea water performed by the urea water addition valve 104 as an exhaust emission control. In the addition control of urea water, an exact amount of urea water to be added is calculated on the basis of the engine operation state and the like in order to obtain reduction processes of NOx in exhaust gas. Then, the open valve state of the urea water addition valve 104 is controlled so that the calculated amount of addition of urea water is injected from the urea water addition valve 104. Incidentally, the addition of urea water for reduction of NOx continues to be performed during operation of the engine, and is stopped when operation of the engine is stopped.

When urea water is added from the urea water addition valve 104 into exhaust gas present in the exhaust passageway 1, the urea water changes into ammonia (NH₃) through thermal decomposition or hydrolysis in exhaust gas. Then, this ammonia flows into the catalytic converter 3. The ammonia, having flown into the catalytic converter 3, take part in reduction reactions with NOx in exhaust gas on the urea-SCR catalyst supported by the SCR catalyst support 4. As a result, Nox in exhaust gas decomposes into water and nitrogen (N₂), which is harmless. Incidentally, the ammonia having passed through the SCR catalyst support 4 without being reacted is oxidized and decomposed into water and nitrogen on the ASC catalyst supported by the ASC catalyst support 5 disposed downstream of the SCR catalyst support 4 in the exhaust flow direction.

Furthermore, when the internal combustion engine is cold to a certain degree, urea water remaining in the urea water addition valve 104 or the supply passageway 102 freezes and expands in volume. This may break or damage the urea water addition valve 104 or the supply passageway 102. In order to restrain such breakage of the urea water addition valve 104 or the supply passageway 102, the electronic control unit 10 performs a recovery process. The recovery process is a process in which urea water remaining in the supply passageway 102 is recovered into the urea water tank 101 by reversely turning the urea water pump 103 during stop of the engine.

However, if the battery voltage of the vehicle-mounted battery 2 is low when the recovery process of urea water is performed, the driving capability of the urea water pump 103 is also low. Therefore, in this embodiment, the execution time of the recovery process is variably set on the basis of the battery voltage. That is, the execution time of the recovery process is set according to the battery voltage. Due to this, the recovery process is precisely executed according to the driving capability of urea water pump 103.

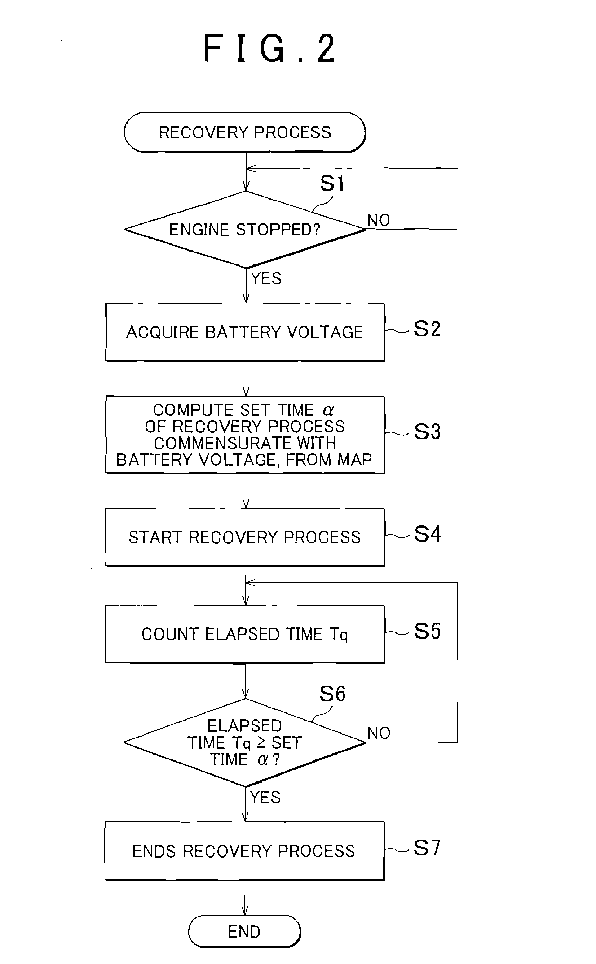

Next, with reference to a flowchart shown in FIG. 2, operations involved in the recovery process of the embodiment will be described in detail. This recovery process is executed by the electronic control unit 10 only once after the engine is stopped.

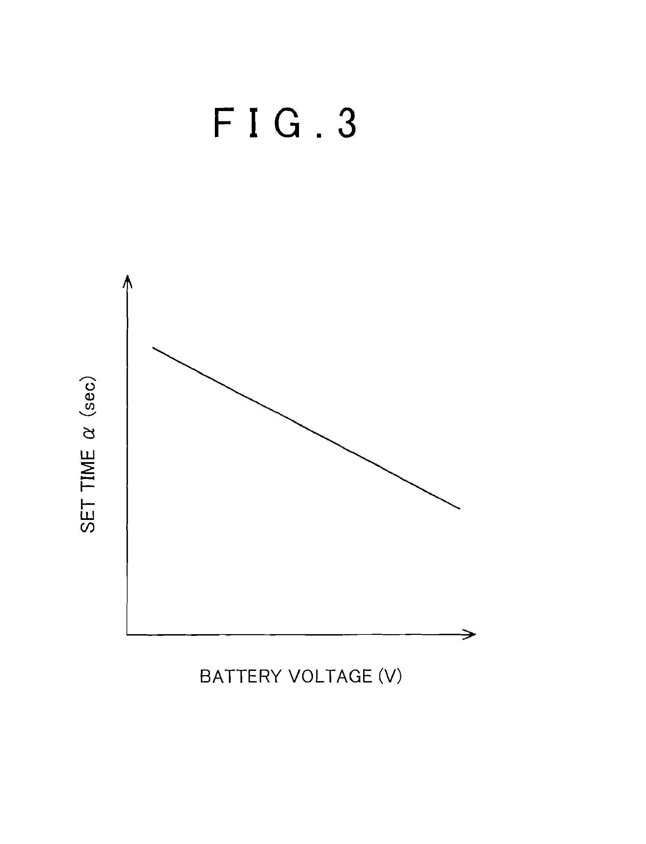

As shown in FIG. 2, in this process, it is firstly determined whether the engine has been stopped (step S1). Incidentally, this determination can be performed on the basis of the signal from the ignition switch 9. If it is determined that the engine has stopped (YES in step S1), the process subsequently proceeds to step S2. In step S2, information about the battery voltage of the vehicle-mounted battery 2 is acquired. Incidentally, the battery voltage may be calculated by the electronic control unit 10, which is fed with electricity from the battery 2. It is also permissible to provide a voltage sensor or the like for providing information about the battery voltage. Then, in step S3, a set time α of the recovery process which corresponds to the battery voltage is computed from a map. The map is stored beforehand in the electronic control unit 10. An example of a correspondence relation between the set time α of the recovery process and the battery voltage is shown in FIG. 3.

As shown in FIG. 3, the set time α of the recovery process is set so as to be longer as the battery voltage is lower. In the map shown in FIG. 3, the execution time of the recovery process necessary to recover the remaining urea water is set corresponding to the battery voltage. Specifically, in this map, the execution time of the recovery process necessary to recover the remaining urea water is set corresponding to the driving capability of the electric urea water pump 103. The map is prepared beforehand through an experiment or the like.

After the set time α of the recovery process is computed via the map in the above-described manner, the process of recovering urea water is executed (step S4). In this recovery process, the electric urea water pump 103 is driven in the reverse direction to discharge urea water from the supply passageway 102 into the urea water tank 101. At this time, the supply passageway 102 and the urea water addition valve 104 are in communication with each other. Therefore, as the urea water in the supply passageway 102 is discharged by the recovery process, the urea water remaining in the urea water addition valve 104 is also recovered.

In step S5, the elapsed time Tq following the start of the recovery process is counted. Next, it is determined whether the elapsed time Tq thus counted is longer than or equal to the set time α (step S6). If in this determination process, it is determined that the elapsed time Tq is less than the set time α (NO in step S6), the process of step S5 and step S6 is repeated. On the other hand, if it is determined that the elapsed time Tq is longer than or equal to the set time α (YES in step S6), the process proceeds to step S7, in which the recovery process is ended.

Through the foregoing process, the execution time of the recovery process is set at the set time α that is calculated according to the battery voltage. In other words, the execution time of the recovery process is variably set on the basis of the battery voltage. As described above, according to the embodiment, the following advantageous effects can be obtained.

(1) In this embodiment, the set time α of the recovery process is set at a greater value as the battery voltage of the vehicle-mounted battery 2 is lower; and the recovery process is executed until the execution time of the recovery process is equal to or greater than the set time α. In other words, the execution time of the recovery process is set longer as the battery voltage is lower. Therefore, the execution time of the recovery process can be made longer in accordance with decline in the driving capability of the electric urea water pump 103. Furthermore, the additive remaining in the supply passageway 102 can be precisely recovered. Therefore, breakage of the urea water addition valve 104 or the supply passageway 102 can be restrained.

Furthermore, when the battery voltage is high and the driving capability of the urea water pump 103 is high, the execution time of the recovery process is set short. Therefore, it is possible to restrain the occurrence of an event in which the urea water pump 103 is driven more than necessary after the urea water remaining is recovered, and it is also possible to reduce the electric power consumption during stop of the engine.

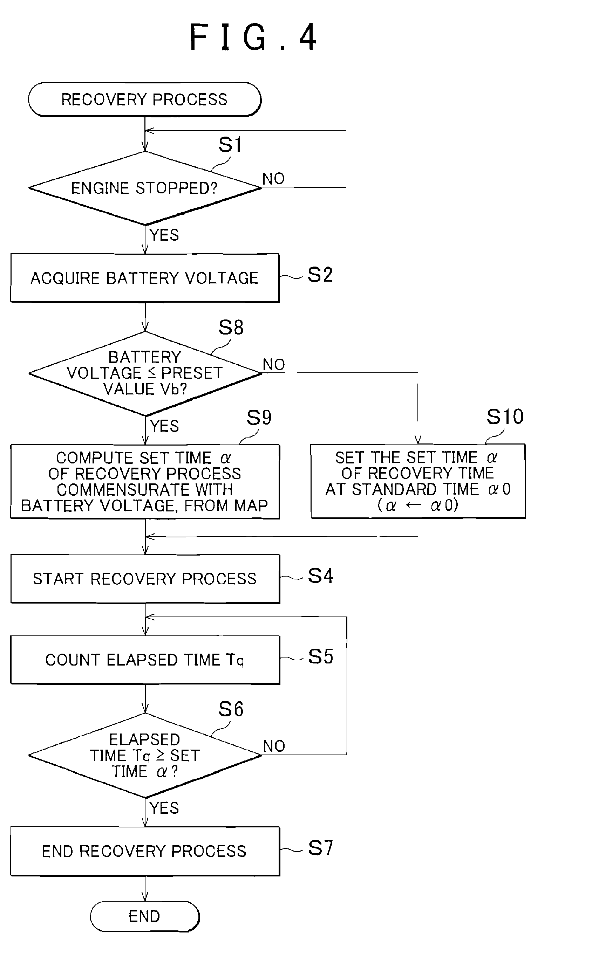

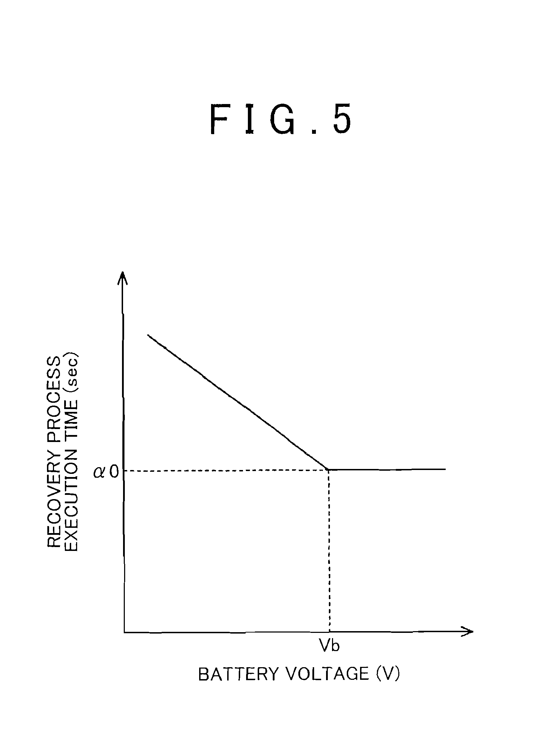

Next, an embodiment in which an exhaust emission control apparatus for an internal combustion engine in accordance with the invention is embodied will be described with reference to FIGS. 4 and 5. This embodiment is different from the foregoing embodiment in the manner of setting the execution time of the recovery process. Incidentally, constructions of the embodiment that are substantially the same as those of the foregoing embodiment will be denoted by the same characters, and detailed descriptions thereof will be omitted.

In this embodiment, when the battery voltage is determined as being less than or equal to a predetermined value, the execution time of the recovery process is variably set. Such operations of the recovery process of this embodiment will be described with reference to a flowchart shown in FIG. 4. Incidentally, in FIG. 4, the processes of steps S1 and S2 and steps S4 to S6 are substantially the same as in the foregoing embodiment. Furthermore, the recovery process in this embodiment is also a process that is executed by the electronic control unit 10 only once after the engine is stopped.

As shown in FIG. 4, in this process, it is firstly determined whether the engine has been stopped (step S1). If it is determined that the engine has been stopped (YES in step S1), the process subsequently proceeds to step S2. In step S2, information about the battery voltage of the vehicle-mounted battery 2 is acquired. Next, in step S8, it is determined whether the calculated battery voltage is less than or equal to a predetermined value Vb. The predetermined value Vb has been set at a maximum value of the battery voltage at which the urea water remaining in the supply passageway 102 cannot be sufficiently recovered if the recovery process for urea water is executed for a standard time α0. If in the process of determining whether the battery voltage is less than or equal to the predetermined value Vb, it is determined that the calculated battery voltage is greater than the predetermined value Vb (NO in step S8), the set time α of the recovery process is set at the standard time α0 (step S10). Specifically, if it is determined that when the recovery process is executed at the calculated battery voltage for the standard time α0, the urea water remaining in the supply passageway 102 can be sufficiently recovered, the abnormality determination value α of the recovery process is set at the standard time α0. Incidentally, the standard time α0 is an execution time that is set for the recovery process during a usual state. The standard time α0 is, for example, an amount of time determined beforehand according to the capacity of the urea water addition valve 104 or the supply passageway 102, or the like.

On the other hand, it is determined that the calculated battery voltage is less than or equal to the predetermined value Vb (YES in step S8), the set time α of the recovery process is computed according to the battery voltage from the map (step S9). Specifically, in the case where it is determined that even if the recovery process is executed at the calculated battery voltage for the standard time α0, the urea water remaining in the supply passageway 102 cannot be sufficiently recovered, the set time α of the recovery process is computed according to the battery voltage, from the map. Incidentally, the map is stored beforehand in the electronic control unit 10. Furthermore, in the map, the set time α is set longer than the standard time α0 (α > α0). Furthermore, the set time α is set longer as the battery voltage is lower.

Then, after the set time α of the recovery process is computed in step S9 or step S10, the recovery process for urea water is executed (step S4). Subsequently, the elapsed time Tq following the start of the recovery process is counted (step S5).

Next, it is determined whether the thus-counted elapsed time Tq is greater than or equal to the set time α (step S6). If in this process, it is determined that the elapsed time Tq is less than the set time α (NO in step S6), the process of steps S5 and S6 is repeated. On the other hand, if it is determined that the elapsed time Tq is greater than or equal to the set time α (YES in step S6), the process proceeds to step S7, in which the recovery process ends.

Next, a relation between the battery voltage and the execution time of the recovery process that is set in the foregoing process will be described with reference to FIG. 5. As shown in FIG. 5, if the battery voltage is greater than the predetermined value Vb, the execution time of the recovery process is set at the standard time α0. On the other hand, if the battery voltage is less than or equal to the predetermined value Vb, the execution time is set longer as the battery voltage is lower. In this manner, in the embodiment, when the battery voltage is less than or equal to the predetermined value Vb, the execution time of the recovery process is set longer than the standard time α0.

As described above, according to this embodiment, the following advantageous effects can be obtained. (2) In this embodiment, if the battery voltage is less than or equal to the predetermined value Vb and execution of the recovery process for the standard time α0 will not sufficiently recover the remaining urea water, the execution time of the recovery process is set longer than the standard time α0. Therefore, in the case where urea water cannot sufficiently be recovered within the usually set execution time, the execution time of the recovery process can be made longer. Therefore, the urea water remaining in the supply passageway 102 can be precisely recovered.

(3) In this embodiment, if the battery voltage is less than the predetermined value Vb, the execution time of the recovery process is set longer as the battery voltage is lower. Therefore, the execution time of the recovery process can be increased in accordance with decrease in the driving capability of the electric urea water pump 103, the urea water remaining in the supply passageway 102 can be precisely recovered. Incidentally, the foregoing embodiments can also be carried out with modifications as follows.

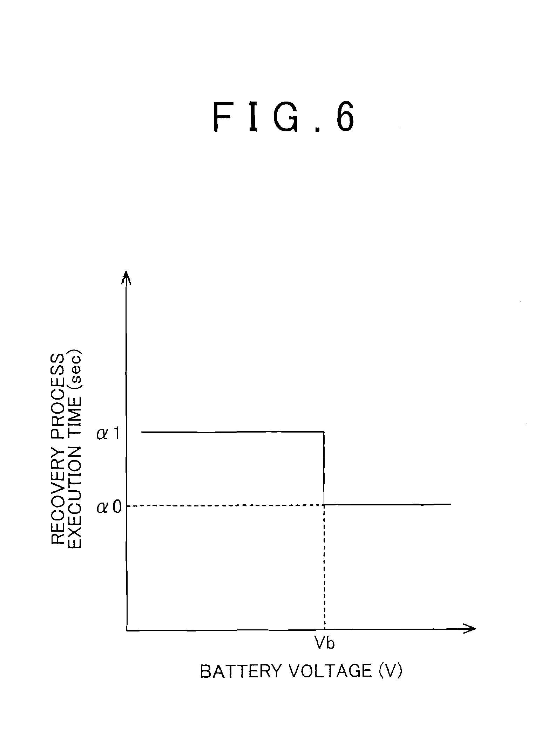

In the foregoing embodiments, in the case where the battery voltage is greater than the predetermined value Vb, the execution time of the recovery process is set at the standard time α0, and in the case where the battery voltage is less than or equal to the predetermined value Vb, the execution time of the recovery process is set longer as the battery voltage is lower. However, the manner of setting the execution time of the recovery process is not limited to the foregoing manner. An example of a different manner of setting the execution time is shown in FIG. 6.

As shown in FIG. 6, when the battery voltage is greater than the predetermined value Vb, the execution time of the recovery process may be set at the standard time α0, and when the battery voltage is less than or equal to the predetermined value Vb, the execution time of the recovery process may be set at a predetermined time α1 (α1 > α0). Furthermore, instead of setting two different values of time, that is, the standard time α0 and the predetermined time α1, the execution time of the recovery process may be set at three or more different values of time. Such a construction, too, is able to achieve an advantageous effect similar to the effect described in (2) above.

In the recovery processes in the foregoing embodiments, information about the battery voltage is acquired and the set time α commensurate with the battery voltage is computed from a map, and then the recovery process is accordingly executed. However, the manner of setting the execution time of the recovery process is not limited to foregoing manner. For example, the battery voltage may be constantly monitored, and during execution of the recovery process, the execution time of the recovery process may be changed according to change in the battery voltage, during execution of the recovery process. This arrangement also makes it possible to precisely recover the urea water remaining.

Although in the foregoing embodiments, the determination as to whether the engine has been stopped is carried out on the basis of the signal from the ignition switch 9, the determination may instead be carried out on the basis of a detected value from a different sensor, for example, the crank angle sensor, or the like.

In the foregoing embodiments, the invention is embodied in the exhaust emission control apparatus that supplies urea water as an additive. However, the additive employed may also be a reducing agent other than urea water. For example, the invention may be applied to an apparatus that adds ammonia water, fuel, etc.

While the disclosure has been explained in conjunction with specific exemplary embodiments thereof, it is evident that many alternatives, modifications, and variations will be apparent to those skilled in the art. Accordingly, exemplary embodiments of the disclosure as set forth herein are intended to be illustrative, not limiting. There are changes that may be made without departing from the scope of the disclosure.

## Claims

1. An exhaust emission control apparatus for an internal combustion engine which includes an addition valve (104) provided in an exhaust passageway (1) of the internal combustion engine and a supply passageway (102) that supplies a liquid-form additive to the addition valve (104) and which executes a recovery process of recovering the additive present in the supply passageway (102) by driving an electric pump (103) with a vehicle-mounted battery (2) after the internal combustion engine stops, **characterized in that**
execution time of the recovery process is variably set based on battery voltage of the vehicle-mounted battery (2).

2. The exhaust emission control apparatus according to claim 1, wherein
the execution time of the recovery process is set longer as the battery voltage is lower.

3. The exhaust emission control apparatus according to claim 1 or 2, wherein
the execution time of the recovery process is variably set when the battery voltage is less than or equal to a predetermined value.

4. The exhaust emission control apparatus according to any one of claims 1 to 3, wherein
the additive is urea water, and a nitrogen oxide in exhaust gas is removed through a selective catalyst reduction, using the urea water as a reducing agent.

5. A control method for an exhaust emission control apparatus for an internal combustion engine which includes an addition valve (104) provided in an exhaust passageway (1) of the internal combustion engine and a supply passageway (102) that supplies a liquid-form additive to the addition valve (104) and which executes a recovery process of recovering the additive present in the supply passageway (102) by driving an electric pump (103) with a vehicle-mounted battery (2) after the internal combustion engine stops, **characterized in that**
execution time of the recovery process is variably set based on battery voltage of the vehicle-mounted battery (2).
